(19) Europäisches Patentamt
European Patent Office
Office européen des brevets

(11) **EP 1 835 630 A1**

(12) **DEMANDE DE BREVET EUROPEEN**

(43) Date de publication:
**19.09.2007 Bulletin 2007/38**

(51) Int Cl.:
***H04B 1/52*** *(2006.01)*

(21) Numéro de dépôt: **06290437.0**

(22) Date de dépôt: **17.03.2006**

| | |
|---|---|
| (84) Etats contractants désignés:<br>**AT BE BG CH CY CZ DE DK EE ES FI FR GB GR HU IE IS IT LI LT LU LV MC NL PL PT RO SE SI SK TR**<br>Etats d'extension désignés:<br>**AL BA HR MK YU**<br><br>(71) Demandeurs:<br>• **STMicroelectronics N.V.**<br>**1118 BH Schiphol Airport**<br>**Amsterdam (NL)**<br>• **STMICROELECTRONICS SA**<br>**92120 Montrouge (FR)** | (72) Inventeurs:<br>• **Smaini, Lydi**<br>**74160 Saint-Julien-en Genevois (FR)**<br>• **Baudin, Pierre**<br>**38000 Grenoble (FR)**<br><br>(74) Mandataire: **Zapalowicz, Francis**<br>**Bureau Casalonga & Josse**<br>**Bayerstrasse 71/73**<br>**80335 München (DE)** |

(54) **Procédé de minimisation de la fuite de signal dans un système du type à transmission bidirectionnelle simultanée, et dispositif correspondant**

(57) On élabore un signal de correction (scor) en appliquant une valeur réglable de gain/atténuation (G) et une valeur réglable de phase (φ) à un signal d'émission prélevé sur la voie d'émission après la transposition de fréquence d'émission, on soustrait ce signal de correction au signal présent sur la voie de réception avant d'effectuer la transposition de fréquence de réception, on élabore une information numérique (IN) représentative du signal soustrait (err), et on règle ladite valeur de gain/atténuation et ladite valeur de phase de façon à minimiser ladite information numérique.

## FIG.1

Printed by Jouve, 75001 PARIS (FR)

**Description**

L'invention concerne d'une façon générale les systèmes de communication sans fil, notamment les systèmes du type à transmission bidirectionnelle simultanée (« Full Duplex »), et plus particulièrement les systèmes CDMA-FDD (« Code Division Multiple Access-Frequency Division Duplex »).

L'invention concerne plus particulièrement la minimisation de la fuite de signal de la voie d'émission vers la voie de réception, ou « TX leakage » selon une dénomination anglo-saxonne bien connue de l'homme du métier.

Dans un système de communication sans fil, une station de base communique avec une pluralité de terminaux distants, tels que des téléphones mobiles cellulaires. Les accès multiples par division de fréquence (FDMA : "Frequency-Division Multiple Access" en langue anglaise) et les accès multiples par division temporelle (TDMA : "Time Division Multiple Access" en langue anglaise) sont les schémas d'accès multiples traditionnels pour délivrer des services simultanés à un certain nombre de terminaux. L'idée de base sous-jacente aux systèmes FDMA et TDMA consiste à partager la ressource disponible, respectivement en plusieurs fréquences ou en plusieurs intervalles temporels, de telle sorte que plusieurs terminaux peuvent fonctionner simultanément sans provoquer d'interférence.

Les téléphones fonctionnant selon la norme GSM appartiennent aux systèmes FDMA et TDMA en ce sens que l'émission et la réception s'effectuent à des fréquences différentes et également à des intervalles temporels différents.

A l'opposé de ces systèmes utilisant une division de fréquence ou une division temporelle, les systèmes CDMA (Système à accès multiples par division de code; "Code Division Multiple Access" en langue anglaise) permettent aux utilisateurs multiples de partager une fréquence commune et un canal temporel commun en utilisant une modulation codée. Parmi les systèmes CDMA on peut citer le système CDMA 2000, le système WCDMA ("Wide Band CDMA" en langue anglaise; CDMA large bande) ou la norme IS-95.

Dans les systèmes CDMA, comme il est bien connu par l'homme du métier, un code d'embrouillage ("scrambling code" en langue anglaise) est associé à chaque station de base et permet de distinguer une station de base d'une autre. En outre, un code orthogonal, connu par l'homme du métier sous la dénomination dé "Code OVSF", est alloué à chaque terminal distant (comme par exemple un téléphone mobile cellulaire). Tous les codes OVSF sont orthogonaux entre eux, ce qui permet de distinguer un terminal distant d'un autre.

Avant d'émettre un signal sur le canal de transmission à destination d'un terminal distant, le signal a été embrouillé et étalé ("spread " en langue anglaise) par la station de base en utilisant le code d'embrouillage de la station de base et le code OVSF du terminal distant.

Dans les systèmes CDMA, on peut encore distinguer les systèmes dit « à transmission bidirectionnelle simultanée (systèmes « Full Duplex ») qui utilisent une fréquence distincte pour l'émission et la réception (système CDMA-FDD) de façon à émettre et recevoir simultanément et ceux qui utilisent une fréquence commune pour l'émission et la réception, mais des domaines temporels distincts pour l'émission et la réception (système CDMA-TDD).

L'invention s'applique avantageusement aux systèmes de communication du type à transmission bidirectionnelle simultanée, et plus particulièrement aux systèmes du type CDMA-FDD.

Un dispositif du type à transmission bidirectionelle simultanée peut simultanément transmettre et recevoir des informations. Généralement, un tel dispositif comporte une voie d'émission et une voie de réception couplées via un duplexeur à une antenne commune.

Bien que le duplexeur soit un composant qui permette une certaine isolation entre la voie d'émission et la voie de réception, une partie du signal émis fuit généralement de la voie d'émission vers la voie de réception via le duplexeur. Un tel signal de fuite, également connu sous la dénomination anglo-saxonne de « TX leakage », peut ainsi causer des interférences préjudiciables au bon décodage du signal reçu.

Et, la non-linéarité des composants de la voie de réception, comme par exemple l'étage de transposition de fréquence, ainsi que l'éventuelle interaction du signal de fuite avec un signal de brouillage, créent généralement des composantes de distorsion ou d'intermodulation qui se situent dans la bande du signal utile.

Une solution pour s'affranchir des effets du signal de fuite consiste à utiliser des filtres du type à ondes acoustiques de surface (filtres SAW) généralement disposés entre l'amplificateur faible bruit et l'étage de transposition de fréquence de la voie de réception.

Cependant, l'utilisation de tels filtres limite la possibilité d'une intégration du récepteur sur une seule puce, requiert l'utilisation de composants discrets pour l'appariement en entrée et en sortie des différentes puces, et augmente le coût du système total.

La demande de brevet US 2005/01 07 051 décrit une autre solution pour résoudre ce problème des effets du signal de fuite. Cette autre solution, entièrement analogique, est basée sur un filtrage adaptatif analogique comportant une estimation du signal de fuite et une soustraction de ce signal de fuite estimé sur la voie de réception. Néanmoins, une telle solution nécessite la réalisation analogique d'un estimateur adaptatif comportant des multiplieurs, des intégrateurs, des filtres. Ceci conduit par conséquent à une réalisation relativement complexe et coûteuse à mettre en oeuvre.

L'invention vise à apporter une solution radicalement différente au problème du signal de fuite entre la voie d'émission et la voie de réception dans un dispositif du type à transmission bidirectionnelle simultanée.

Selon un aspect de l'invention, il est proposé un procédé de traitement d'un signal incident reçu par un dispositif du type à transmission bidirectionnelle simultanée, ce dispositif comprenant une voie de réception au sein de laquelle on effectue une transposition de fréquence de réception, une conversion analogique numérique du signal transposé et un traitement numérique du signal converti. Ce dispositif comprend également une voie d'émission au sein de laquelle on effectue une transposition de fréquence d'émission.

Selon une caractéristique générale de cet aspect de l'invention, on élabore un signal de correction en appliquant une valeur réglable de gain et une valeur réglable de phase à un signal d'émission prélevé sur la voie d'émission après ladite transposition de fréquence d'émission, on soustrait ce signal de correction au signal présent sur la voie de réception avant d'effectuer ladite transposition de fréquence de réception, on élabore une information numérique représentative du signal soustrait (résultat de la soustraction) et on règle ladite valeur de gain et ladite valeur de phase de façon à minimiser ladite information numérique.

Ainsi, l'invention prévoit-elle notamment en combinaison l'élaboration d'une information numérique sur laquelle on va effectuer un traitement numérique de minimisation, jusqu'à obtenir une valeur correspondante de gain et de phase, de façon à supprimer quasiment le signal de fuite au sein du signal présent sur la voie de réception avant la transposition de fréquence.

Une telle solution est particulièrement simple à mettre en oeuvre. En effet, l'élaboration de l'information numérique et la détermination de l'information numérique minimale, et par conséquent les valeurs correspondantes de gain et de phase, peuvent utiliser tout ou partie des moyens déjà existants du bloc numérique du dispositif.

Par ailleurs, au sens de l'invention, le terme « gain » doit être pris au sens large et englober la notion de gain d'amplification ou d'atténuation. En général, dans ce type de transmission bidirectionnelle simultanée, comme c'est par exemple le cas dans les systèmes WCDMA-FDD, la puissance transmise est bien supérieure à la puissance reçue. Aussi, la valeur de gain est généralement une valeur d'atténuation.

Et, dans sa partie analogique, l'invention prévoit d'utiliser un simple atténuateur variable et un simple déphaseur.

Plusieurs variantes sont possibles pour l'élaboration de ladite information numérique.

Dans une première variante, ladite information numérique résulte simplement de la conversion analogique numérique du signal soustrait transposé avec une fréquence de transposition égale à la fréquence d'émission.

En d'autres termes, selon cette variante de l'invention, l'élaboration de ladite information numérique comporte une transposition du signal soustrait (signal résultant de la soustraction) avec une fréquence de transposition égale à la fréquence d'émission, et une conversion analogique numérique du signal soustrait transposé; on règle alors la valeur de gain et la valeur de phase jusqu'à obtenir une valeur de ladite information numérique inférieure à un seuil voisin de zéro.

Cette information numérique minimisée est alors simplement la puissance du signal de fuite restant dans la voie de réception, avant l'étage de transposition de réception. Cette puissance a été minimisée autant que possible par l'ajustement du gain et de la phase du signal prélevé sur la voie d'émission.

Selon une deuxième variante de l'invention, ladite information numérique est une estimation numérique d'une composante en bande de base d'un signal d'intermodulation d'ordre 2 présent sur la voie de réception, estimation effectuée après la conversion analogique numérique.

Les inventeurs ont en effet observé qu'estimer le niveau de cette composante d'intermodulation d'ordre 2 en bande de base puis minimiser cette estimation en ajustant la valeur de gain et la valeur de phase appliquées au signal d'émission prélevé avant soustraction sur la voie de réception, permettait de minimiser la puissance du signal de fuite présent dans le signal de réception avant la transposition de fréquence de réception.

En fait, cette composante en bande de base estimée du signal d'intermodulation d'ordre 2 est une image de la puissance du signal de fuite avant la transposition de fréquence de réception.

Par comparaison avec la solution classique de l'art antérieur dans laquelle le signal de fuite est filtré de façon analogique au même titre que tout autre signal perturbateur extérieur (« blocker » en langue anglaise), cette variante de l'invention utilise ici le fait que les caractéristiques de cette perturbation (le signal de fuite) sont connues puisque les données émises sur la voie d'émission sont connues. En conséquence, cette variante de l'invention propose ici avantageusement d'utiliser ce comportement déterministe du signal de fuite pour en estimer numériquement une image et le minimiser. En effet, ce comportement déterministe rend le signal de fuite complètement différent de tout autre signal perturbateur inconnu et cette variant de l'invention utilise avantageusement cette différence.

Les inventeurs ont ainsi observé que l'estimation numérique du niveau de cette composante d'intermodulation d'ordre 2 en bande de base de la voie de réception pouvait s'obtenir aisément à partir des données de la voie d'émission, en particulier de la somme au carré des deux composantes de signal d'émission respectivement prélevées sur les voies 1 et Q de la voie d'émission dans le bloc numérique de traitement du dispositif.

En d'autres termes, selon un mode de mise en oeuvre de l'invention, dans lequel la voie d'émission comprend en outre un bloc numérique comportant deux branches en quadrature de phase et un étage de conversion numérique analogique, l'élaboration de ladite information numérique comporte :

- la sommation de deux composantes de signal élevées au carré et respectivement prélevées sur lesdites deux branches de façon à obtenir un signal numérique sommé,

- l'élaboration d'un signal numérique de référence à partir du signal numérique sommé, et,
- l'estimation de ladite information numérique par un filtrage numérique adaptatif faisant intervenir ledit signal numérique de référence et un signal numérique en bande de base prélevé sur la voie de réception après ladite conversion analogique numérique.

Le signal numérique de référence peut être directement le signal numérique sommé. Cela étant, l'élaboration du signal numérique de référence peut comprendre un filtrage numérique avec un filtre numérique correspondant aux différents filtres de la voie de réception.

Le traitement d'élaboration du signal numérique de référence peut comprendre également une adaptation par une valeur correctrice de gain représentative de la puissance d'émission. Ceci permet de prendre plus facilement en compte les variations élémentaires de puissance d'émission et de diminuer le temps de convergence de l'estimation.

Donc, selon cette deuxième variante de l'invention, on estime ladite information numérique (la composante d'intermodulation d'ordre 2 en bande de base) et on règle la valeur de gain et la valeur de phase appliquée avant soustraction au signal d'émission prélevé de façon à la minimiser.

Dans une troisième variante de l'invention, on règle la valeur de gain et de phase de façon à minimiser ladite information numérique, mais on peut en outre également soustraire cette information numérique estimée audit signal converti, c'est-à-dire au signal numérique de la voie de réception, avant de réinjecter ce signal soustrait dans la voie de réception.

En d'autres termes, le réglage de gain et de phase conduisant à la minimisation de ladite information numérique permet de minimiser la puissance du signal de fuite avant transposition de fréquence, et la soustraction de cette information numérique sur la voie de réception au sein du bloc numérique de traitement du dispositif permet d'éliminer au moins en partie cette puissance résiduelle.

Cette combinaison d'un réglage de gain et de phase et d'une soustraction en numérique de l'information numérique estimée permet ainsi d'améliorer encore la réjection du signal de fuite.

Généralement, on effectue une amplification de signal avant la transposition de fréquence de réception. Dans ce cas, et quelle que soit la variante de l'invention qui est utilisée, on effectue de préférence ladite soustraction entre ladite amplification et la transposition de fréquence de réception.

Cela étant, on pourrait également effectuer cette soustraction avant ladite amplification, mais il conviendrait alors de prendre en compte le coefficient d'amplification correspondant.

Par ailleurs, lorsqu'on effectue sur la voie d'émission après ladite transposition de fréquence d'émission une préamplification de puissance puis une amplification de puissance, ce qui est généralement le cas, on applique de préférence ladite valeur réglable de gain et ladite valeur réglable de phase au signal d'émission prélevé sur la voie d'émission entre ladite préamplification de puissance et ladite amplification de puissance.

Bien qu'il serait possible d'effectuer ce prélèvement après l'amplification de puissance, le fait de prélever après la préamplification de puissance, et ce quelle que soit la variante de l'invention utilisée, permet aisément d'intégrer les moyens de l'invention sur la même puce que celle qui est utilisée pour le reste du dispositif, à l'exception de l'amplificateur de puissance, qui lui, est réalisé sur une puce annexe.

Le signal incident est par exemple reçu par un dispositif appartenant à un système CDMA.

Selon un autre aspect de l'invention, il est également proposé un dispositif du type à transmission bi-directionnelle simultanée, comprenant une voie de réception apte à recevoir un signal incident et comportant un étage de transposition de fréquence de réception, un étage de conversion analogique numérique et un bloc de traitement numérique du signal converti, et une voie d'émission comportant un étage de transposition de fréquence d'émission.

Selon une caractéristique générale de cet autre aspect de l'invention, le dispositif comprend :

- des premiers moyens d'élaboration possédant une première entrée reliée à un endroit de la voie d'émission situé après l'étage de transposition de fréquence d'émission, une deuxième entrée apte à recevoir une valeur réglable de gain et une valeur réglable de phase, et une sortie apte à délivrer un signal de correction,
- des moyens de soustraction possédant une première entrée reliée à un endroit de la voie de réception situé avant l'étage de transposition de fréquence de réception, une deuxième entrée reliée à la sortie des premiers moyens d'élaboration, et une sortie pour délivrer un signal soustrait,
- des deuxièmes moyens d'élaboration aptes à élaborer une information numérique représentative du signal soustrait, et,
- des moyens de traitement aptes à délivrer et à régler ladite valeur de gain et ladite valeur phase de façon à minimiser ladite information numérique.

Selon une variante de l'invention, les deuxièmes moyens d'élaboration comportent des moyens de transposition du signal soustrait avec une fréquence de transposition égale à la fréquence d'émission, des moyens de conversion analogique numérique du signal soustrait transposé, et les moyens de traitement sont aptes à régler la valeur de gain et la valeur de phase jusqu'à obtenir une valeur de ladite information numérique inférieure à un seuil voisin de zéro.

Selon une autre variante de l'invention, les deuxièmes moyens d'élaboration sont aptes à effectuer une estimation numérique d'une composante en bande de base d'un signal d'intermodulation d'ordre 2 présent sur la voie de réception de façon à obtenir ladite information numérique.

Selon un mode de réalisation de l'invention, la voie d'émission comprend en outre un bloc numérique comportant deux branches en quadrature de phase, et un étage de conversion numérique analogique, et les deuxièmes moyens d'élaboration comportent :

- des moyens de calcul possédant deux entrées respectivement connectées sur lesdites deux branches et aptes à effectuer la sommation des deux composantes de signal élevées au carré et respectivement présentes audites deux entrées, et une sortie pour délivrer un signal numérique sommé,
- des moyens intermédiaires aptes à élaborer un signal numérique de référence à partir du signal numérique sommé, et,
- un filtre numérique adaptatif apte à recevoir ledit signal de référence et un signal numérique en bande de base prélevé sur la voie de réception après l'étage de conversion analogique numérique, et à délivrer ladite information numérique estimée.

Les moyens intermédiaires peuvent comprendre un filtre numérique correspondant aux différents filtres de la voie de réception, et/ou des moyens de correction aptes à corriger le signal numérique sommé par une valeur correctrice de gain représentative de la puissance d'émission.

Selon encore une autre variante de l'invention, le bloc numérique de traitement de la voie de réception comprend en outre des moyens additionnels de soustraction possédant une première entrée connectée à la sortie de l'étage de conversion analogique numérique, une deuxième entrée apte à recevoir ladite information numérique estimée et une sortie apte à délivrer le signal soustrait sur la voie de réception.

Selon un mode de réalisation de l'invention, compatible avec toutes les variantes de celle-ci, la voie de réception comporte en outre un amplificateur connecté en amont de l'étage de transposition de fréquence de réception, et les moyens de soustraction sont connectés entre ledit amplificateur et l'étage de transposition de fréquence de réception.

Selon un autre mode de réalisation de l'invention, également compatible avec toutes les variantes de celle-ci, la voie d'émission comprend en outre un pré-amplificateur de puissance connecté en aval de l'étage de transposition de fréquence d'émission et suivi d'un amplificateur de puissance, et la première entrée des premiers moyens d'élaboration est reliée à un endroit de la voie d'émission situé entre le pré-amplificateur de puissance et l'amplificateur de puissance.

Le dispositif selon l'invention peut appartenir à un système CDMA et former un terminal, par exemple un téléphone mobile cellulaire.

D'autres avantages et caractéristiques de l'invention apparaîtront à l'examen de la description détaillée de modes de mise en oeuvre et de réalisation, nullement limitatifs, et des dessins annexés sur lesquels :

- la figure 1 illustre de façon schématique un premier mode de réalisation d'un dispositif selon l'invention,
- la figure 2 illustre les principales étapes d'un premier mode de mise en oeuvre d'un procédé selon l'invention,
- les figures 3 à 8 illustrent schématiquement un deuxième mode de réalisation et de mise en oeuvre de l'invention, et,
- les figures 9 et 10 illustrent schématiquement un troisième mode de réalisation et de mise en oeuvre selon l'invention.

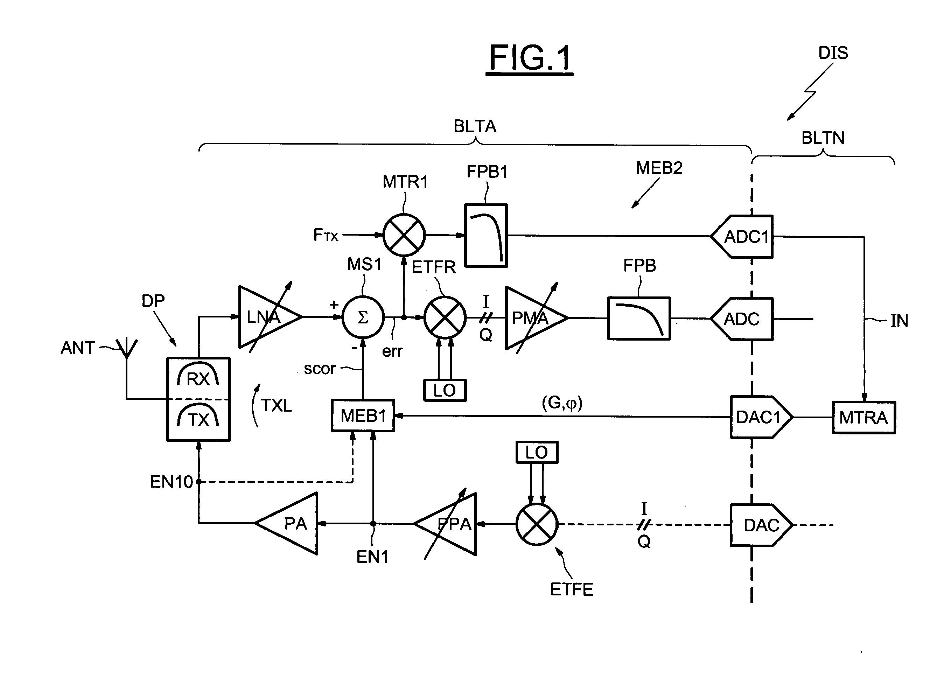

Sur la figure 1, la référence DIS désigne un terminal distant, tel qu'un téléphone mobile cellulaire, qui est en communication avec une station de base, par exemple selon un schéma de communication du type CDMA-FDD.

Le téléphone mobile cellulaire comprend, de façon classique, un bloc analogique BLTA connecté à une antenne ANT par l'intermédiaire d'un duplexeur DP pour recevoir un signal incident sur la voie de réception RX.

La voie de réception comprend un amplificateur faible bruit LNA, un étage de transposition de fréquence de réception ETFR suivi dans le cas présent d'un amplificateur à gain variable post-mélange. Un filtre passe-bas FPB, pour éliminer les résidus de mélange est connecté entre l'amplificateur PMA et un étage de conversion analogique numérique ADC. Cet étage de conversion ADC relie le bloc analogique BLTA à un bloc de traitement numérique BLTN.

Ce bloc de traitement numérique BLTN comprend notamment, de façon classique, un récepteur communément désigné par l'homme du métier sous le vocable « récepteur RAKE », suivi par des moyens classiques de démodulation qui effectuent la démodulation de la constellation délivrée par le récepteur RAKE.

En fait, l'étage de transposition de fréquence ETFR comprend deux mélangeurs qui reçoivent respectivement de la part d'une boucle à verrouillage de phase deux signaux de transposition LO présentant mutuellement une différence de phase de 90°. Après cette transposition de fréquence (effectuée ici par exemple directement en bande de base), la voie de réception comporte deux branches définissant respectivement un flux I (flux direct) et un flux Q (flux en quadrature) selon une dénomination bien connue de l'homme du métier.

En ce qui concerne la voie d'émission TX, celle-ci se comporte classiquement d'un étage de transposition de fréquence d'émission ETFE de façon à effectuer la transposition depuis la bande de base vers la fréquence d'émission.

Cet étage de transposition de fréquence d'émission ETFE est suivi ici d'un préamplificateur de puissance à gain variable PPA, lui-même connecté à un amplificateur de puissance PA dont la sortie est connectée au duplexeur DP.

En général, compte tenu des puissances d'émission spécifiées dans la norme WCDMA, la présence d'un amplificateur de puissance PA après le préamplificateur de puissance est nécessaire. Et, cet amplificateur de puissance est généralement réalisé sur une puce séparée, par exemple en technologie AsGa.

Par contre, le préamplificateur de puissance PPA est quant à lui réalisé sur la même puce que celle incorporant tous les autres composants du dispositif DIS, à l'exception bien entendu du duplexeur.

En Europe, dans la norme WCDMA, la fréquence d'émission est comprise entre 1920 et 1980 MHz tandis que la fréquence de réception est comprise entre 2110 et 2170 MHz. Bien entendu ces plages de fréquences peuvent varier selon les pays.

Le dispositif DIS est dit « à transmission bidirectionnelle simultanée », c'est-à-dire que la réception du signal incident et l'émission d'un signal se font simultanément.

Par ailleurs, on doit généralement émettre un signal de forte puissance pendant que l'on reçoit un signal de faible puissance.

Le duplexeur DP est un composant qui permet également d'isoler la voie d'émission TX de la voie de réception RX.

Cela étant, cette isolation n'est pas parfaite et il en résulte un signal de fuite TXL (« TX leakage » selon une dénomination anglo-saxonne bien connue de l'homme du métier) depuis la voie d'émission vers la voie de réception.

Le mode de réalisation de la figure 1 est une première solution selon l'invention permettant de minimiser le niveau de ce signal de fuite TXL dans le signal présent sur la voie de réception avant l'étage de transposition de fréquence de réception ETFR.

Plus précisément, le dispositif DIS comprend des premiers moyens d'élaboration MEB1 possédant une première entrée reliée à un endroit EN1 de la voie d'émission située après l'étage de transposition de fréquence d'émission ETFE.

Dans le cas présent, l'endroit EN1 est situé entre le préamplificateur de puissance PPA et l'amplificateur de puissance PA. Ceci a l'avantage de pouvoir incorporer les moyens d'élaboration MEB1 ainsi que les autres moyens de l'invention permettant de minimiser le niveau du signal de fuite sur la même puce que celle utilisée pour la réalisation des composants du dispositif DIS à l'exception de l'amplificateur de puissance PA et du duplexeur DP.

Cela étant, il serait également possible selon l'invention, que cet endroit soit un endroit EN10 situé après l'amplificateur de puissance PA.

Les premiers moyens d'élaboration MEB1 comportent également une deuxième entrée apte à recevoir une valeur réglable de gain G et une valeur réglable de phase $\varphi$.

Les premiers moyens d'élaboration MEB1 comportent également une sortie apte à délivrer un signal de correction scor.

Les premiers moyens d'élaboration peuvent comporter par exemple un amplificateur/atténuateur à gain variable et un déphaseur, qui sont des moyens classiques et connus en soi.

Le dispositif comporte également des moyens de soustraction MS1 possédant une première entrée reliée à un endroit de la voie de réception située avant l'étage de transposition de fréquence, une deuxième entrée reliée à la sortie des premiers moyens d'élaboration MEB1 et une sortie pour délivrer un signal soustrait err, qui s'apparente en fait à un signal d'erreur.

Dans le cas présent, les moyens de soustraction MS1 sont situés entre l'amplificateur faible bruit LNA et l'étage de transposition de fréquence de réception ETFR.

Cela étant, il serait tout à fait possible de placer ces moyens de soustraction MSI avant l'amplificateur faible bruit LNA.

Le dispositif DIS comporte par ailleurs des deuxièmes moyens d'élaboration MEB2 aptes à élaborer une information numérique IN représentative du signal soustrait err.

Enfin, des moyens de traitement MTRA sont aptes à délivrer et à régler ladite valeur de gain G et ladite valeur de phase $\varphi$ de façon à minimiser cette information numérique IN.

Plus précisément, les deuxièmes moyens d'élaboration comportent ici des moyens de transposition de fréquence MTR1 du signal soustrait. Ces moyens de transposition MTR1 comportent une entrée pour recevoir le signal soustrait err et une autre entrée pour recevoir le signal de transposition $F_{TX}$.

La fréquence de transposition du signal $F_{TX}$ est égale à la fréquence du signal d'émission de sorte qu'après transposition, le signal soustrait est transposé en bande de base.

Les deuxièmes moyens d'élaboration comportent ici de préférence un filtre passe-bas FPB1 de façon à éliminer les résidus de mélange. Le signal filtré est converti dans un convertisseur analogique numérique ADC1 de façon à obtenir l'information numérique IN.

Ce convertisseur analogique numérique ADC1 peut être le convertisseur analogique numérique généralement utilisé pour la mesure de puissance (pour le contrôle de puissance de la voie d'émission) ou bien un convertisseur analogique numérique distinct.

Le signal soustrait err est en fait un signal d'erreur qui est représentatif du niveau du signal de fuite après soustraction et avant transposition de fréquence.

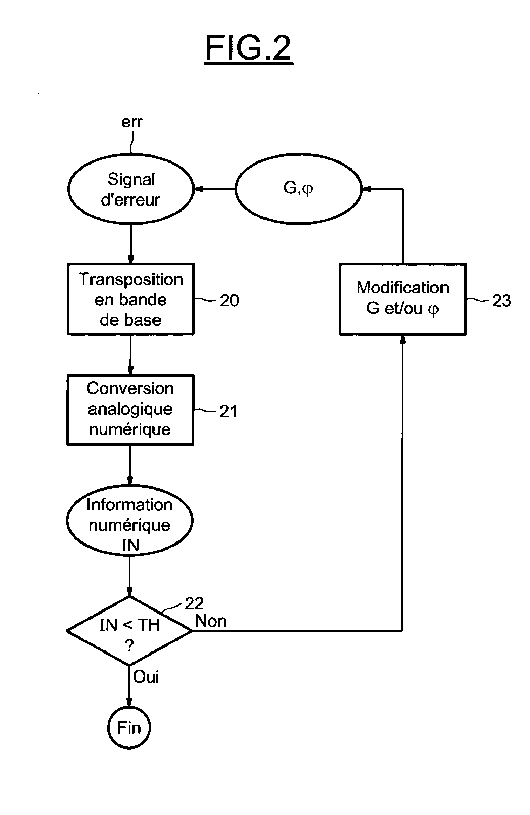

Comme illustré sur la figure 2, pour une valeur de gain G et une valeur de phase φ, on a un certain niveau du signal err. Après transposition en bande de base 20 et conversion analogique numérique 21, on obtient l'information numérique IN qui est comparée à un seuil TH (étape 22).

Ce seuil TH est choisi voisin de zéro. De la valeur de ce seuil va dépendre le niveau résiduel de signal de fuite que l'on tolère compte tenu de l'application envisagée. L'homme du métier saura donc choisir ce seuil TH en fonction du niveau résiduel de signal de fuite souhaité.

Tant que l'information numérique n'est pas inférieure au seuil TH, on va modifier la valeur du gain G et/ou la valeur de la phase φ (étape 23) et recommencer les étapes 20, 21 et 22, et ce jusqu'à minimiser l'information numérique IN, c'est-à-dire obtenir une information numérique IN inférieure au seuil TH.

Le niveau du signal soustrait err (ou signal d'erreur) est directement lié à la différence de gain entre le signal de correction scor et le signal sortant de l'amplificateur à faible bruit LNA, ainsi qu'au déphasage entre ces deux signaux.

En pratique, étant donné que le dispositif connaît la puissance d'émission requise par la station de base, et que les différents coefficients d'atténuation et d'amplification des composants du dispositif DIS sont par ailleurs connus, la minimisation de l'information numérique IN peut consister simplement à fixer a priori une valeur de gain (atténuation) G compte tenu de la puissance d'émission requise, et de faire varier la valeur de phase φ jusqu'à obtenir l'information numérique IN inférieure au seuil TH.

En pratique, les différentes valeurs de gain (d'atténuation) G et de phase φ sont par exemple stockées sous forme numérique dans une table accessible par les moyens de traitement MTRA.

Les moyens de traitement MTRA extraient donc de la table une valeur de gain G correspondant a priori à la bonne valeur de gain compte tenu de la puissance d'émission demandée et des différents coefficients de gains et atténuations des composants du système, et extraient également différentes valeurs de phase correspondant à cette valeur de gain mémorisée. Ces informations numériques de gain (atténuation) et de phase sont converties en des informations analogiques par un convertisseur numérique analogique DAC1 avant d'être envoyées respectivement sur l'atténuateur variable et le déphaseur des premiers moyens d'élaboration MEB1.

Et, les moyens de traitement MTRA continuent cette extraction de phase jusqu'à obtenir une information numérique inférieure au seuil souhaité.

A titre indicatif, une réjection minimum de 20 dB du signal de fuite correspond à une différence de gain de 1 dB et à une différence de phase inférieure à 3° entre les deux signaux respectivement présents aux deux entrées du soustracteur MS 1. Un tel désappariement entre les niveaux et les phases de ces deux signaux est aisément compatible avec la technologie habituellement utilisée pour la réalisation des circuits intégrés.

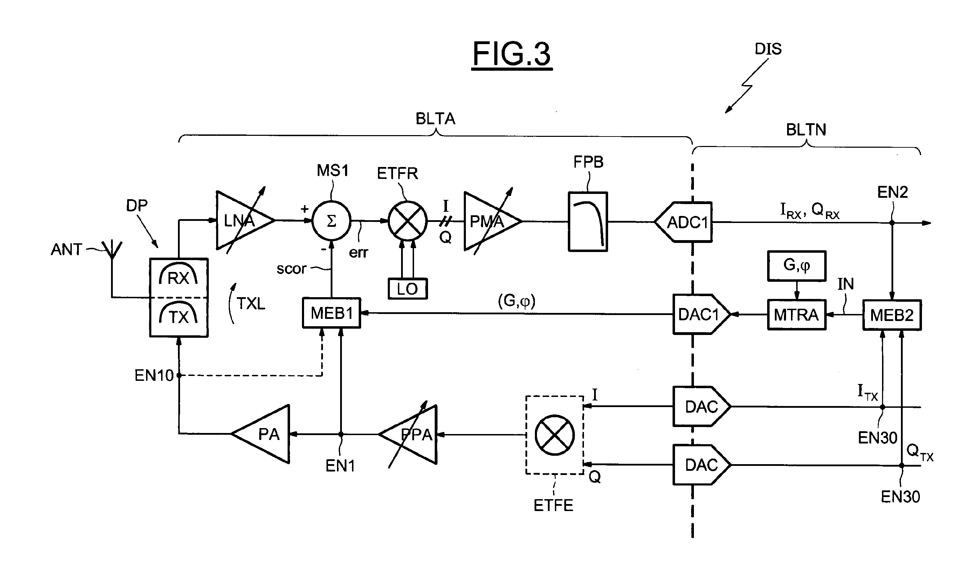

La figure 3 illustre un second mode de réalisation d'un dispositif selon l'invention dans lequel les deuxièmes moyens d'élaboration MEB2 sont cette fois-ci entièrement numériques et réalisés au sein du bloc numérique de traitement BLTN du dispositif.

Les premiers moyens d'élaboration MEB1 ainsi que le soustracteur MS1 sont analogues aux moyens correspondants qui ont été décrits en référence à la figure 1.

La voie de réception comporte des composants présentant une non-linéarité d'ordre 2, c'est-à-dire dont la fonction de transfert F peut s'exprimer sous la forme :

$$y(t) = \alpha_1\, x(t) + \alpha_2\, x^2(t)$$

dans laquelle x(t) désigne le signal d'entrée et *y(t)* le signal de sortie du dispositif.

Un tel dispositif présentant une non-linéarité d'ordre 2 est par exemple l'étage de transposition de fréquence de référence ETFR.

Si l'on considère un signal radiofréquence incident complexe modulé x(t), ayant la formulation suivante :

$$x(t) = I(t)\cos(\omega_0 t) - Q(t)\sin(\omega_0 t)$$

on obtient à la sortie du dispositif présentant la non-linéarité d'ordre 2, le signal *y(t)* défini par :

$$y(t) = \alpha_1\, x(t) + \frac{\alpha_2}{2}\left(I^2(t) + Q^2(t)\right) + \frac{\alpha_2}{2}\left[\left(I^2(t) - Q^2(t)\right)\cos(2\omega_0 t) - 2I(t)Q(t)\sin(2\omega_0 t)\right]$$

On voit donc que le signal de sortie de ce dispositif comporte une composante linéaire proportionnelle au signal d'entrée, et un signal d'intermodulation d'ordre 2 présentant une composante en bande de base proportionnelle au carré du module de la modulation complexe initiale, ainsi qu'une composante fréquentielle à la fréquence de $\omega_0$.

Aussi, si le signal d'entrée est le signal de fuite TXL, la composante linéaire ainsi que la composante $2\omega_0$ seront filtrées notamment par le filtre passe-bas post-mélange FPB.

Par contre, la composante en bande de base du signal d'intermodulation d'ordre 2 va se superposer avec la composante en bande de base du signal de réception après transposition à la fréquence de réception dans l'étage de transposition ETFR.

Par ailleurs ce signal d'intermodulation d'ordre 2, lorsqu'il se combine éventuellement à un signal extérieur perturbateur (« blocker », en langue anglaise) peut créer également des composantes d'intermodulation d'ordre 3.

Toutes ces composantes d'intermodulation s'avèrent gênantes pour décoder correctement le signal utile reçu.

Dans le mode de réalisation de la figure 3, les deuxièmes moyens d'élaboration MEB2 vont effectuer une estimation numérique de la composante en bande de base du signal d'intermodulation d'ordre 2 présent sur la voie de réception de façon à obtenir ladite information numérique IN. En d'autres termes, ici, cette information IN est la composante en bande de base de l'intermodulation d'ordre 2 de la voie de réception.

En effet, les inventeurs ont observé que cette composante en bande de base estimée du signal d'intermodulation d'ordre 2 constituait une image du signal de fuite présent en entrée de l'étage de transposition de fréquence de réception.

Et, comme il sera expliqué plus en détail ci-après, une fois cette information numérique IN élaborée, les moyens de traitement MTRA vont chercher à la minimiser en ajustant les valeurs de gain et de phase appliquées par les premiers moyens d'élaboration MBE1 au signal prélevé sur la voie d'émission, et ce, d'une façon analogue à ce qui a été décrit en référence à la figure 1.

Les deuxièmes moyens d'élaboration MEB2 comportent ici deux entrées EN30 respectivement connectées sur les deux branches $I_{TX}$ et $Q_{TX}$ de la voie numérique d'émission et une autre entrée connectée à un endroit EN2 de la voie de réception, et plus précisément à un endroit EN2 de l'une ou l'autre des voies $I_{RX}$ ou $Q_{RX}$ de la voie de réception.

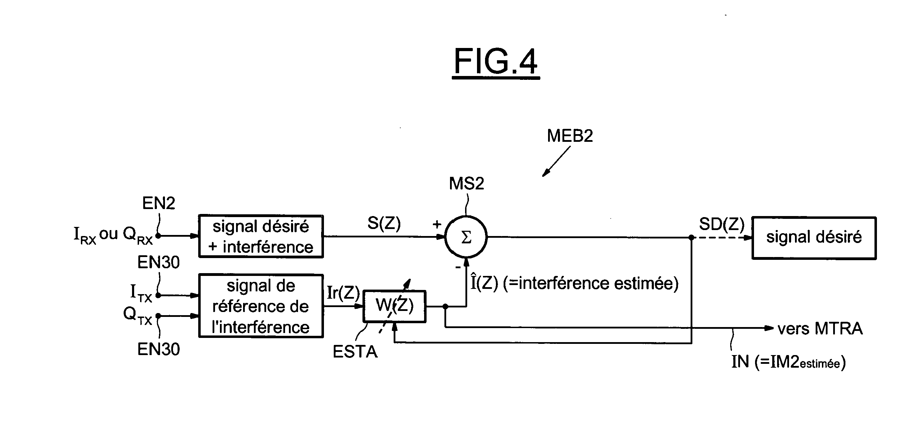

Comme illustré sur la figure 4, les moyens d'élaboration MEB2 vont utiliser un filtre numérique adaptatif comportant un estimateur adaptatif ESTA et un soustracteur MS2.

Le soustracteur reçoit sur une première entrée le signal désiré S auquel lui est adjointe une interférence (en l'espèce, la composante en bande de base d'intermodulation d'ordre 2) et sur son autre entrée, une estimation de cette interférence produite par l'estimateur adaptatif.

Cet estimateur adaptatif ESTA estime cette interférence à partir d'un signal de référence de l'interférence qui est obtenu à partir des composantes de signaux prélevés aux endroits EN30, et de la sortie du soustracteur.

La sortie du soustracteur MS2 délivre le signal désiré débarrassé de l'interférence SD.

Le signal de référence est un signal qui présente une fonction de corrélation non nulle avec l'interférence. Par ailleurs, puisque le filtre adaptatif va chercher à supprimer dans le signal S tout ce qui est corrélé avec le signal de référence, il va également chercher à supprimer toute portion éventuelle du signal désiré qui se trouverait dans ce signal de référence. Mais dans le cas présent, ceci est sans objet car le signal de référence n'est élaboré qu'à partir de composantes de signal prélevées sur la voie d'émission.

Dans la variante de la figure 3, la sortie de l'estimateur adaptatif fournit l'information numérique qui est égale ici à la composante en bande de base estimée du signal d'intermodulation d'ordre 2.

Dans cette variante, le signal désiré fourni en sortie du soustracteur MS2 n'est pas injecté sur la voie de réception.

On verra également que dans une autre variante de l'invention, le signal désiré fourni en sortie du soustracteur pourra également être réinjecté sur la voie de réception en combinaison avec l'estimation et la minimisation de ladite composante en bande de base d'intermodulation.

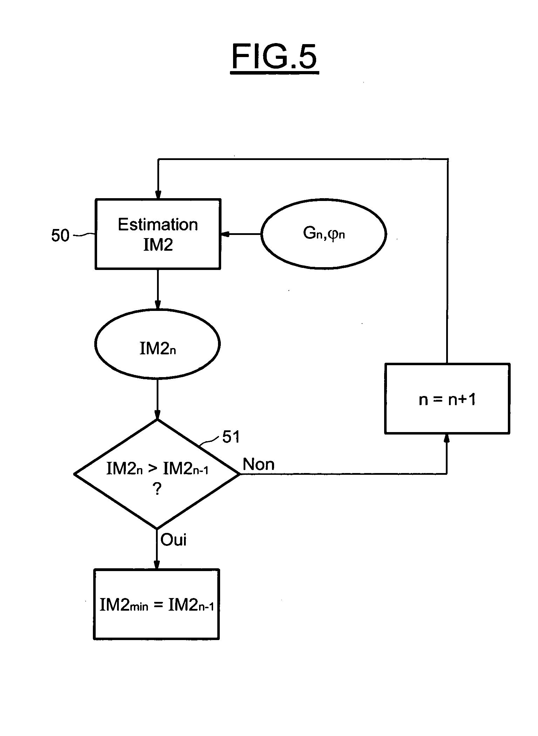

Le mode de mise en oeuvre de l'invention correspondant au mode de réalisation des figures 3, 4, 6, 7 et 8 est illustré schématiquement sur la figure 5.

A partir d'une valeur de gain (atténuation) Gn et de phase $\varphi$n délivrées aux premiers moyens d'élaboration MEB1, les deuxièmes moyens d'élaboration MEB2 effectuent une estimation du niveau de la composante en bande de base IM2 du signal d'intermodulation d'ordre 2 (étape 50) et fournissent une valeur estimée $IM2_n$ du niveau de cette composante d'intermodulation d'ordre 2 en bande de base.

Pour minimiser cette information numérique $IM2_n$, les moyens de traitement MTRA vont simplement par exemple, comparer (étape 51) cette valeur $IM2_n$ avec la valeur $IM2_{n-1}$ précédemment calculée pour d'autres valeurs de gain et de phase.

Si la valeur courante est supérieure à la valeur précédente, alors les moyens de traitement vont d'une façon analogue à ce qui a été décrit en référence à la figure 1, faire varier le gain et/ou la phase (en général, on fait varier la phase pour une valeur de gain fixée) pour obtenir une nouvelle valeur estimée. Si cette nouvelle valeur estimée est supérieure à la valeur précédemment estimée, alors la valeur minimale du niveau d'intermodulation en bande de base IM2$_{min}$ est égale à ladite valeur précédemment calculée, et l'on a obtenu les valeurs de gain G et de phase φ voulues.

De tels moyens de traitement MTRA capables de mettre en oeuvre ce procédé de minimisation, peuvent être aisément réalisés par logiciel au sein du processeur en bande de base du dispositif, par exemple.

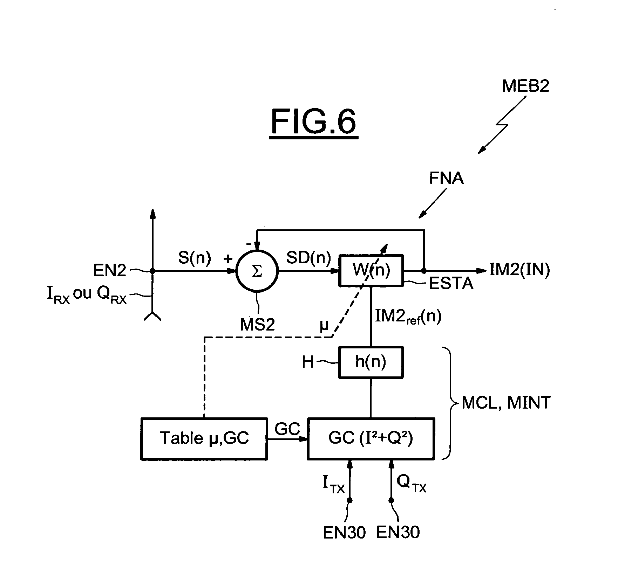

On se réfère maintenant plus particulièrement aux figures 6 à 8 pour décrire plus en détail les deuxièmes moyens d'élaboration MEB2.

Ces deuxièmes moyens d'élaboration MEB2 comportent des moyens de calcul MCL possédant deux entrées respectivement connectées aux endroits EN30, et aptes à effectuer la sommation des deux composantes de signal élevées au carré et respectivement présentes à ces deux endroits EN30. La sortie de l'additionneur ADD des moyens de calcul MCL délivre ainsi un signal numérique sommé SNS.

Les deuxièmes moyens d'élaboration MB2 comportent également des moyens intermédiaires MINT aptes à élaborer un signal numérique de référence IM2$_{ref}$ à partir du signal numérique sommé SNS.

On reviendra plus en détail sur ces moyens intermédiaires MINT qui peuvent être en tout état de cause optionnels.

Les deuxièmes moyens d'élaboration MEB2 comportent également un filtre numérique adaptatif FNA apte à recevoir le signal de référence IM2$_{ref}$ et un signal numérique en bande de base prélevé sur la voie de réception à l'endroit EN2, par exemple sur la voie I$_{RX}$ (bien qu'il soit aussi possible de le prélever sur la voie Q$_{RX}$). Le filtre numérique adaptatif est alors apte à délivrer ladite information numérique estimée IM2 qui forme ici l'information numérique IN que les moyens de traitement MTRA vont chercher à minimiser.

Le filtre numérique adaptatif FNA comporte un estimateur adaptatif ESTA, ainsi qu'un soustracteur MS2.

L'estimateur adaptatif peut utiliser un algorithme des moindres carrés pour minimiser l'erreur quadratique résiduelle, c'est-à-dire la puissance de l'erreur.

Un tel estimateur utilisant un algorithme des moindres carrés est connu en soi. A titre indicatif, l'équation finale conduisant à une implémentation itérative est donnée par la formule (1) ci-dessous :

$$\vec{W}(n+1) = \vec{W}(n) + \mu\, \mathrm{SD}(\mathrm{n})\, \overrightarrow{IM2}_{ref}(n) \qquad (1)$$

dans laquelle :

$$\vec{W}(n) = \left[ W_0(n)\dots\dots W_{N-1}(n) \right] \qquad (2)$$

et dans laquelle :

$$\overrightarrow{IM2}_{ref}(n) = \left[ IM2_{ref}(n)\dots\dots\dots IM2_{ref}(n-N+1) \right] \qquad (3)$$

N est ici la longueur du filtre adaptatif.

Le paramètre μ est un paramètre garantissant la convergence de l'algorithme. Ce paramètre doit satisfaire aux inéquations suivantes :

$$0 \langle\, \mu\, \langle 2/N\sigma^2 \quad IM2_{ref}$$

dans laquelle $\sigma^2{}_{IM2ref}$ désigne la variance du signal de référence d'interférence.

Cette valeur de variance est aisément déterminable à partir de la puissance d'émission désirée, et qui est connue par le dispositif.

C'est la raison pour laquelle il est prévu une table dans laquelle sont stockées les différentes valeurs de $\mu$ convenant pour une convergence et une stabilité de l'algorithme pour différentes valeurs de puissance d'émission. En pratique, cette table pourra par exemple contenir 10 valeurs pour la variable $\mu$ correspondant à 10 pas de 1 dB pour les 10 dB de la plage de puissance maximum d'émission.

On revient maintenant plus en détail sur les moyens intermédiaires MINT qui permettent de déterminer le signal de référence $IM2_{ref}$ à partir du signal sommé SNS.

Une première adaptation, optionnelle, consiste à affecter le signal numérique sommé SNS d'une valeur de gain (atténuation) GC en fonction de la variation de puissance d'émission. En fait, cette adaptation de gain est optionnelle car elle permet simplement une convergence plus rapide de l'estimateur adaptatif.

De même, il est préférable, mais non nécessairement obligatoire, que les moyens intermédiaires comprennent un filtre numérique correspondant aux différents filtres (analogique et numérique) de la voie de réception. A cet égard, on peut prévoir que le filtre numérique H comprenne un filtre dit « Root Raised Cosine », référencé RRCL, bien connu en soi par l'homme du métier, et ayant en particulier comme propriétés que sa réponse impulsionnelle passe par zéro à la fréquence des symboles.

Le filtre H peut également comporter un filtre FLT passe-haut dans l'hypothèse ou un tel filtre est présent bien entendu sur la voie de réception.

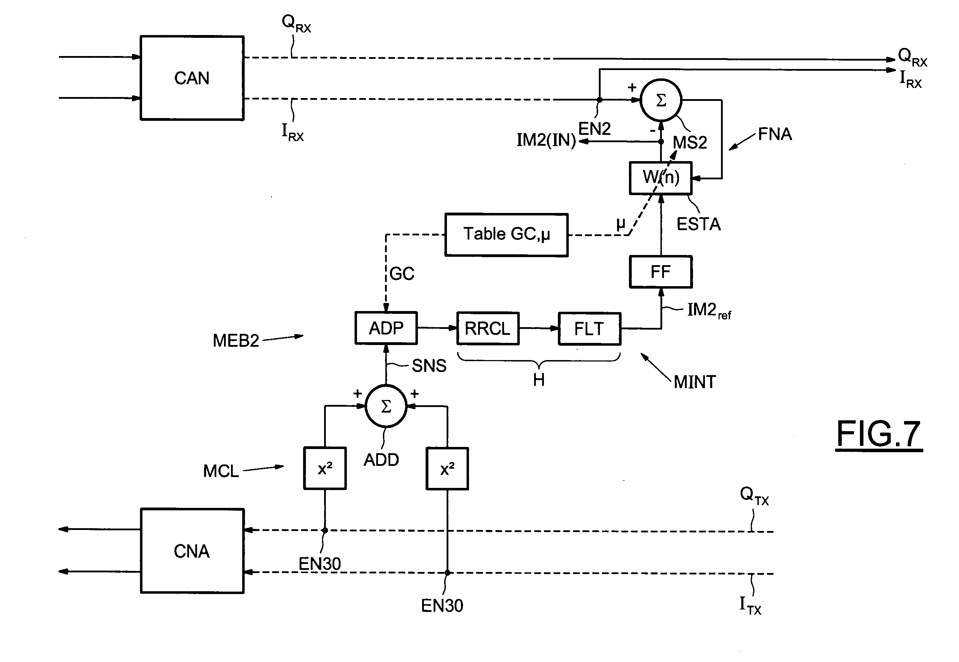

Enfin, dans la réalisation illustrée sur la figure 7, une mémoire FF du type premier entré-premier sorti (FIFO) est utilisée pour des raisons de synchronisation.

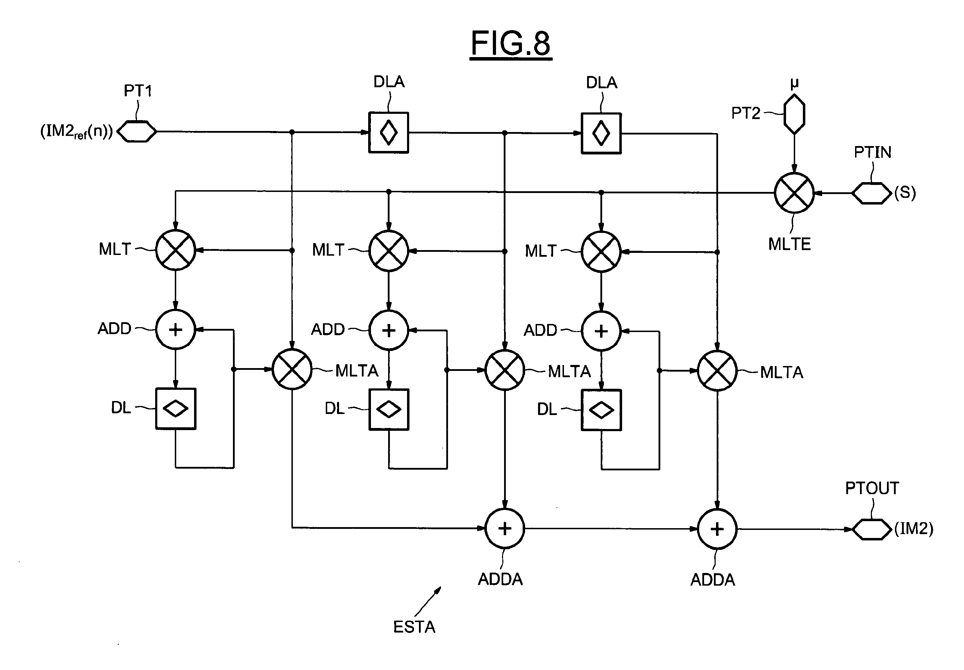

La figure 8 illustre une réalisation possible de l'estimateur adaptatif EFTA utilisant un algorithme des moindres carrés à trois coefficients.

L'estimateur adaptatif ESTA de la figure 8 comporte par conséquent un premier port d'entrée PT1 pour recevoir le signal de référence $IM2_{ref}$, un deuxième port PT2 pour recevoir le paramètre $\mu$, un troisième port PTIN pour recevoir le signal S prélevé à l'endroit 2 de la voie de réception, et un port de sortie PTOUT pour délivrer l'information numérique IN, c'est-à-dire ici le la composante en bande de base estimée du signal d'intermodulation d'ordre 2.

L'estimateur adaptatif comporte ici essentiellement trois branches identiques formées chacune d'un multiplieur MLT, d'un additionneur ADD et d'un moyen de retard DL capable de retarder d'un échantillon. Ces trois moyens MLT, ADD et DL sont connectés en série à la sortie d'un multiplieur d'entrée MLTE dont les deux entrées sont respectivement reliées aux ports PT2 et PTIN.

La sortie du moyen de retard DL de chacune des branches est reliée à un autre multiplieur MLTA ainsi qu'à l'entrée de l'additionneur ADD de la branche.

Ce multiplieur MLTA est connecté au port PT1 soit directement, soit par l'intermédiaire d'autres moyens de retard DLA analogues au moyen de retard DL.

Enfin, les sorties des trois multiplieurs MLTA sont sommées (additionneurs ADDA) avant d'être délivrées au port de sortie PTOUT.

Le mode de réalisation décrit sur les figures 3 à 8 permet également aisément d'obtenir une réjection d'au moins 20 dB du signal de fuite TXL tout en permettant de relâcher les contraintes sur la non-linéarité d'ordre 2 de l'étage de transposition de fréquence de réception.

Ce mode de réalisation permet également de minimiser les composantes d'intermodulation d'ordre 3.

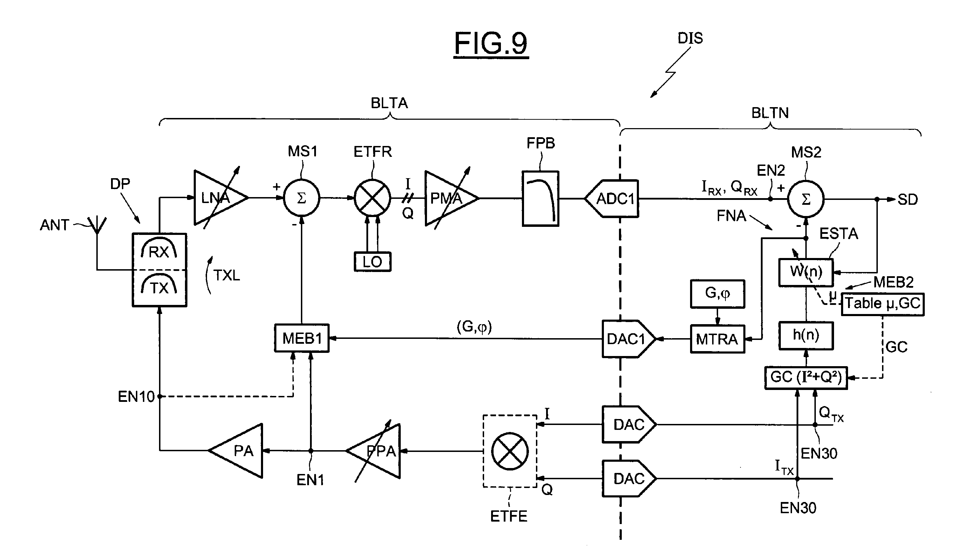

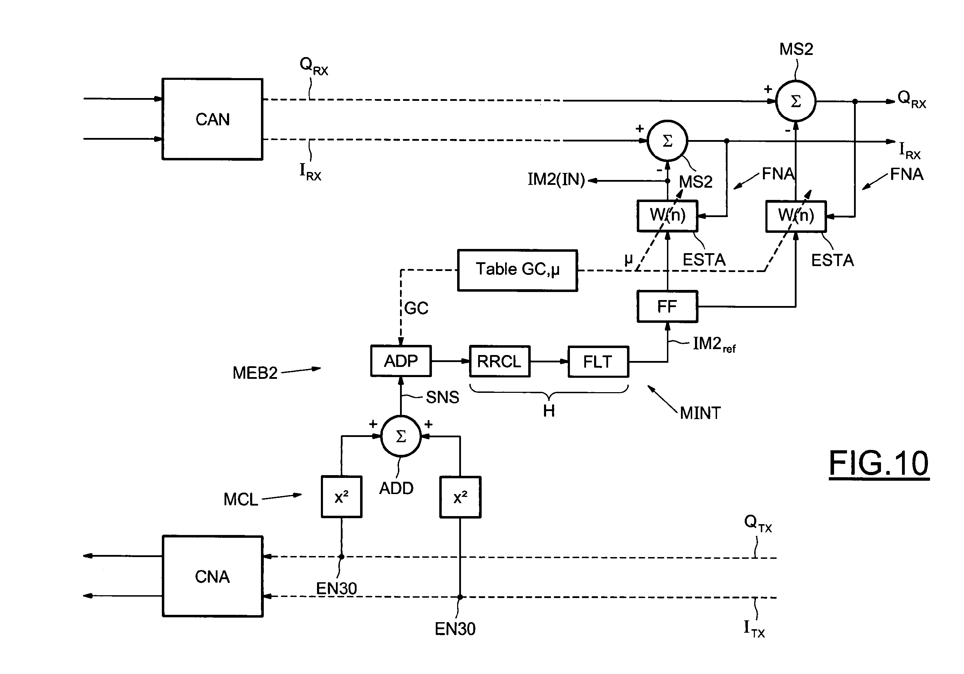

Le mode de réalisation des figures 9 et 10 permet également d'estimer le niveau d'intermodulation d'ordre 2 de la voie de réception, puis de le minimiser d'une façon analogue à ce qui a été décrit en référence aux figures 3 à 8, mais dans ce mode de réalisation, on soustrait en outre cette information numérique estimée au signal numérique émanant du convertisseur analogique numérique ADC, le signal soustrait SD, résultant de la soustraction, étant délivré sur la voie de réception.

En effet, dans le mode de réalisation des figures 3 à 8, le signal désiré SD, c'est-à-dire le signal débarrassé de la composante en bande de base d'intermodulation d'ordre 2, n'est pas réinjecté dans la voie de réception.

En d'autres termes, comme illustré sur la figure 9, le soustracteur MS2 fait cette fois-ci partie intégrante de la voie numérique de réception de façon à délivrer le signal soustrait SD sur cette voie de réception.

Plus précisément, comme illustré sur la figure 10, le filtre numérique FNA est dupliqué de façon à pouvoir réinjecter sur chacune des branches $I_{RX}$ et $Q_{RX}$ de la voie de réception, le signal SD débarrassé de la composante d'intermodulation d'ordre 2 en bande de base.

Ainsi, ce mode de réalisation des figures 9 et 10 utilise en combinaison une estimation de la composante en bande de base du signal d'intermodulation d'ordre 2 et une minimisation de façon à injecter en amont de l'étage de transposition de fréquence de réception, un signal déjà débarrassé quasi totalement du signal de fuite, et une deuxième élimination du résiduel de la composante d'intermodulation d'ordre 2 en bande de base dans la partie numérique.

Ceci permet de diminuer encore davantage le niveau des composantes d'intermodulation se superposant au signal utile en bande de base de la voie de réception.

**Revendications**

1. Procédé de traitement d'un signal incident reçu par un dispositif du type à transmission bi-directionnelle simultanée, comprenant une voie de réception au sein de laquelle on effectue une transposition de fréquence de réception, une conversion analogique numérique du signal transposé et un traitement numérique du signal converti, et une voie d'émission au sein de laquelle on effectue une transposition de fréquence d'émission, **caractérisé par le fait qu'**on élabore un signal de correction (scor) en appliquant une valeur réglable de gain/atténuation (G) et une valeur réglable de phase ($\varphi$) à un signal d'émission prélevé sur la voie d'émission après ladite transposition de fréquence d'émission, on soustrait ce signal de correction au signal présent sur la voie de réception avant d'effectuer ladite transposition de fréquence de réception, on élabore une information numérique (IN) représentative du signal soustrait (err), et on règle ladite valeur de gain/atténuation et ladite valeur de phase de façon à minimiser ladite information numérique.

2. Procédé selon la revendication 1, dans lequel l'élaboration de ladite information numérique comporte une transposition (MTR1) du signal soustrait (err) avec une fréquence de transposition égale à la fréquence d'émission, une conversion analogique numérique (ADC1) du signal soustrait transposé et on règle la valeur de gain et la valeur de phase jusqu'à obtenir une valeur de ladite information numérique (IN) inférieure à un seuil (TH) voisin de zéro.

3. Procédé selon la revendication 1, dans lequel ladite information numérique (IN) est une estimation numérique de la composante en bande de base (IM2) d'un signal d'intermodulation d'ordre 2 présent sur la voie de réception, estimation effectuée après la conversion analogique numérique.

4. Procédé selon la revendication 1 ou 3, dans lequel la voie d'émission comprend en outre un bloc numérique comportant deux branches ($I_{TX}$, $Q_{TX}$) en quadrature de phase, et un étage de conversion numérique analogique, et l'élaboration de ladite information numérique (IN) comporte la sommation de deux composantes de signal élevées au carré et respectivement prélevées (EN30) sur lesdites deux branches de façon à obtenir un signal numérique sommé (SNS), l'élaboration d'un signal numérique de référence ($IM2_{ref}$) à partir du signal numérique sommé, et l'estimation de ladite information numérique (IN) par un filtrage numérique adaptatif (FNA) faisant intervenir ledit signal numérique de référence ($IM2_{ref}$) et un signal numérique en bande de base (S) prélevé sur la voie de réception après ladite conversion analogique numérique.

5. Procédé selon la revendication 4, dans lequel le traitement d'élaboration du signal numérique de référence comprend un filtrage numérique avec un filtre numérique (H) correspondant aux différents filtres de la voie de réception.

6. Procédé selon la revendication 4 ou 5, dans lequel le traitement d'élaboration du signal numérique de référence comprend une adaptation par une valeur correctrice de gain/atténuation (GC) représentative de la puissance d'émission.

7. Procédé selon l'une des revendications 4 à 6, dans lequel on soustrait en outre ladite information numérique estimée audit signal converti et on réinjecte le signal soustrait (SD) dans la voie de réception.

8. Procédé selon l'une des revendications précédentes, dans lequel on effectue une amplification de signal (LNA) avant le transposition de fréquence de réception, et on effectue ladite soustraction (MS1) entre ladite amplification et la transposition de fréquence.

9. Procédé selon l'une des revendications précédentes, dans lequel on effectue en outre sur la voie d'émission après ladite transposition de fréquence d'émission une pré-amplification de puissance (PPA) puis une amplification de puissance (PA), et on applique ladite valeur réglable de gain et ladite valeur réglable de phase au signal d'émission prélevé sur la voie d'émission entre ladite préamplification de puissance et ladite amplification de puissance.

10. Procédé selon l'une des revendications précédentes, dans lequel le signal incident est reçu par un dispositif appartenant à un système CDMA.

11. Dispositif du type à transmission bi-directionnelle simultanée, comprenant une voie de réception apte à recevoir un signal incident et comportant un étage de transposition de fréquence de réception (ETFR), un étage de conversion analogique numérique (ADC) et un bloc de traitement numérique du signal converti, et une voie d'émission comportant un étage de transposition de fréquence d'émission (ETFE), **caractérisé par le fait qu'**il comprend des premiers moyens d'élaboration (MEB1) possédant une première entrée reliée à un endroit (EN1)de la voie d'émission situé après l'étage de transposition de fréquence d'émission, une deuxième entrée aptes à recevoir une valeur réglable de gain et une valeur réglable de phase, et une sortie apte à délivrer un signal de correction (scor), des moyens de soustraction (MS1) possédant une première entrée reliée à un endroit de la voie de réception situé avant l'étage de transposition de fréquence de réception, une deuxième entrée reliée à la sortie des premiers moyens d'élaboration, et une sortie pour délivrer un signal soustrait (err), des deuxièmes moyens d'élaboration (MEB2) aptes à élaborer une information numérique représentative du signal soustrait, et des moyens de traitement (MTRA) aptes à délivrer et à régler ladite valeur de gain et ladite valeur phase de façon à minimiser ladite information numérique.

12. Dispositif selon la revendication 11, dans lequel les deuxièmes moyens d'élaboration (MEB2) comportent des moyens (MTR1) de transposition du signal soustrait avec une fréquence de transposition égale à la fréquence d'émission, des moyens de conversion analogique numérique (ADC1) du signal soustrait transposé et les moyens de traitement (MTRA) sont aptes à régler la valeur de gain et la valeur de phase jusqu'à obtenir une valeur de ladite information numérique inférieure à un seuil (TH) voisin de zéro.

13. Dispositif selon la revendication 11, dans lequel les deuxièmes moyens d'élaboration (MEB2) sont aptes à effectuer une estimation numérique d'une composante en bande de base d'un signal d'intermodulation d'ordre 2 présent sur la voie de réception, de façon à obtenir ladite information numérique (IN).

14. Dispositif selon la revendication 11 ou 13, dans lequel la voie d'émission comprend en outre un bloc numérique comportant deux branches en quadrature de phase, et un étage de conversion numérique analogique, et les deuxièmes moyens d'élaboration (MEB2) comportent des moyens de calcul (MC2) possédant deux entrées respectivement connectées sur lesdites deux branches et aptes à effectuer la sommation des deux composantes de signal élevées au carré et respectivement présentes audites deux entrées, et une sortie pour délivrer un signal numérique sommé (SNS), des moyens intermédiaires (MINT) aptes à élaborer un signal numérique de référence à partir du signal numérique sommé, et un filtre numérique adaptatif (FNA) apte à recevoir ledit signal de référence et un signal numérique en bande de base prélevé sur la voie de réception après l'étage de conversion analogique numérique, et à délivrer ladite information numérique estimée (IM2).

15. Dispositif selon la revendication 14, dans lequel les moyens intermédiaires comprennent un filtre numérique (H) correspondant aux différents filtres de la voie de réception.

16. Dispositif selon la revendication 14 ou 15, dans lequel les moyens intermédiaires comprennent des moyens de correction (ADP) aptes à corriger le signal numérique sommé par une valeur correctrice de gain/atténuation représentative de la puissance d'émission.

17. Dispositif selon l'une des revendications 14 à 16, dans lequel le bloc numérique de traitement de la voie de réception comprend en outre des moyens additionnels de soustraction (MS2) possédant une première entrée connectée à la sortie de l'étage de conversion analogique numérique, une deuxième entrée apte à recevoir ladite information numérique estimée et une sortie apte à délivrer le signal soustrait (SD) sur la voie de réception.

18. Dispositif selon l'une des revendications 11 à 17, dans lequel la voie de réception comporte en outre un amplificateur (LNA) connecté en amont de l'étage de transposition de fréquence de réception, et les moyens de soustraction sont connectés entre ledit amplificateur et l'étage de transposition de fréquence de réception.

19. Dispositif selon l'une des revendications 11 à 18, dans lequel la voie d'émission comprend en outre un pré-amplificateur de puissance (PPA) connecté en aval de l'étage de transposition de fréquence d'émission et suivi d'un amplificateur de puissance (PA), et la première entrée des premiers moyens d'élaboration est reliée à un endroit de la voie d'émission situé entre le pré-amplificateur de puissance et l'amplificateur de puissance.

20. Dispositif selon l'une des revendications 11 à 19, appartenant à un système CDMA.

21. Dispositif selon la revendication 20, formant un terminal, par exemple un téléphone mobile cellulaire.

# FIG.1

EP 1 835 630 A1

# FIG.2

err

Signal d'erreur

G,φ

Transposition en bande de base — 20

Modification G et/ou φ — 23

Conversion analogique numérique — 21

Information numérique IN

IN < TH ? — 22

Non

Oui

Fin

## FIG.3

EP 1 835 630 A1

FIG.4

# FIG.5

# FIG.6

FIG.7

EP 1 835 630 A1

19

## FIG.8

EP 1 835 630 A1

FIG.9

EP 1 835 630 A1

FIG.10

EP 1 835 630 A1

**Office européen**

**des brevets**

# RAPPORT DE RECHERCHE EUROPEENNE

Numéro de la demande

EP 06 29 0437

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 5 691 978 A (KENWORTHY ET AL) 25 novembre 1997 (1997-11-25) <br> * abrégé * <br> * colonne 1, ligne 53 - ligne 58 * <br> * colonne 2, ligne 19 - ligne 64 * <br> * colonne 3, ligne 1 - ligne 2 * <br> * colonne 3, ligne 17 - colonne 4, ligne 21 * <br> * colonne 4, ligne 57 - ligne 64 * <br> * revendications 1-19 * <br> * figures 1-6 * <br> ----- | 1-21 | INV. <br> H04B1/52 |
| X | US 6 229 992 B1 (MCGEEHAN JOSEPH PETER ET AL) 8 mai 2001 (2001-05-08) <br><br> * abrégé * <br> * colonne 1, ligne 30 - ligne 45 * <br> * colonne 2, ligne 30 - ligne 62 * <br> * colonne 2, ligne 67 - colonne 3, ligne 16 * <br> * colonne 3, ligne 66 - colonne 4, ligne 2 * <br> * colonne 4, ligne 9 - ligne 40 * <br> * colonne 4, ligne 51 - ligne 53 * <br> * colonne 4, ligne 57 - ligne 58 * <br> * colonne 5, ligne 3 - ligne 4 * <br> * colonne 5, ligne 11 - ligne 14 * <br> * colonne 5, ligne 17 - ligne 23 * <br> * colonne 5, ligne 33 - colonne 6, ligne 2 * <br> * colonne 6, ligne 12 - ligne 33 * <br> * colonne 6, ligne 43 - ligne 55 * <br> * colonne 7, ligne 4 - ligne 6 * <br> * colonne 7, ligne 23 - ligne 26 * <br> * figures 2,5-10 * <br> ----- <br> -/-- | 1,2,8, 10-12, 20,21 | **DOMAINES TECHNIQUES RECHERCHES (IPC)** <br><br> H04B |

Le présent rapport a été établi pour toutes les revendications

| Lieu de la recherche | Date d'achèvement de la recherche | Examinateur |
|---|---|---|
| La Haye | 11 août 2006 | Dhibi, Y |

EPO FORM 1503 03.82 (P04C02)

| | Office européen des brevets | **RAPPORT DE RECHERCHE EUROPEENNE** | Numéro de la demande EP 06 29 0437 |
|---|---|---|---|

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2005/215204 A1 (WALLACE RAYMOND C ET AL) 29 septembre 2005 (2005-09-29) * abrégé * * page 1, colonne 1, alinéa 6 - colonne 2, alinéa 8 * ----- | 1,3 | |
| X | US 5 444 864 A (SMITH ET AL) 22 août 1995 (1995-08-22) * abrégé * * colonne 1, ligne 10 - ligne 13 * * colonne 1, ligne 35 - ligne 52 * * colonne 2, ligne 43 - ligne 66 * * figures 2,3 * ----- | 1,2,11, 12,20,21 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| La Haye | 11 août 2006 | Dhibi, Y |

**EP 1 835 630 A1**

**ANNEXE AU RAPPORT DE RECHERCHE EUROPEENNE
RELATIF A LA DEMANDE DE BREVET EUROPEEN NO.**

EP 06 29 0437

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

11-08-2006

| Document brevet cité au rapport de recherche | | Date de publication | Membre(s) de la famille de brevet(s) | | Date de publication |
|---|---|---|---|---|---|
| US 5691978 | A | 25-11-1997 | AUCUN | | |
| US 6229992 | B1 | 08-05-2001 | AU | 3874895 A | 06-06-1996 |
| | | | DE | 69532860 D1 | 13-05-2004 |
| | | | DE | 69532860 T2 | 21-04-2005 |
| | | | EP | 0792542 A1 | 03-09-1997 |
| | | | WO | 9615596 A1 | 23-05-1996 |
| US 2005215204 | A1 | 29-09-2005 | WO | 2005104390 A1 | 03-11-2005 |
| US 5444864 | A | 22-08-1995 | AUCUN | | |

EPO FORM P0460

**RÉFÉRENCES CITÉES DANS LA DESCRIPTION**

**Documents brevets cités dans la description**

- US 20050107051 A